# EUROPEAN PATENT APPLICATION

(11) **EP 4 693 010 A1**
(43) Date of publication of application: **11.02.2026**
(21) Application number: 24847899.2
(22) Date of filing: 27.06.2024
(51) Int. Cl.: G06F 3/04842, G06F 9/451, G06F 1/3234

(54) **WIDGET DISPLAY METHOD AND ELECTRONIC DEVICE**

(30) Priority: 28.07.2023 CN 202310956870
(71) Applicant: Huawei Technologies Co., Ltd., Shenzhen, Guangdong 518129 (CN)
(72) Inventor: JIN, Senjun, Shenzhen, Guangdong 518129 (CN); WANG, Genliang, Shenzhen, Guangdong 518129 (CN); QIANG, Bo, Shenzhen, Guangdong 518129 (CN)
(74) Representative: Pfenning, Meinig & Partner mbB
(86) International application number: PCT/CN2024/102097
(87) International publication number: WO 2025/025938

(57) **Abstract**

Embodiments of this application provide a widget display method and an electronic device, and relate to the field of terminal technologies. The method includes: receiving a first trigger operation of a user, where the first trigger operation is used to add a first static widget, and the first static widget corresponds to a plurality of components; rendering the plurality of components corresponding to the first static widget; and generating and displaying a first static image based on the plurality of rendered components, where the first static image is used to display first resource content corresponding to the first static widget. Replacing the plurality of rendered components with one static image can avoid continuous running and refreshing of a plurality of components corresponding to one static widget while ensuring normal display of the static widget. This reduces memory usage of the widget and reduces power consumption of the electronic device.

## Description

This application claims priority to Chinese Patent Application No. 202310956870.5, filed with the China National Intellectual Property Administration on July 28, 2023 and entitled "WIDGET DISPLAY METHOD AND ELECTRONIC DEVICE", which is incorporated herein by reference in its entirety.

### TECHNICAL FIELD

This application relates to the field of terminal technologies, and in particular, to a widget display method and an electronic device.

### BACKGROUND

Currently, most electronic devices (such as mobile phones) usually push content to users in a form of a widget (Widget). For example, a mobile phone displays a widget in an interface, and a user may enter a corresponding application by using the widget, and quickly view some content or quickly implement a function. The widget may be understood as a component provided by a third-party application or a system application on the electronic device, for example, a clock component, a weather component, and a music component.

Generally, the widget includes one or more subcomponents. For example, the widget may include a cover subcomponent, a song information subcomponent, a play/pause subcomponent, a next-song subcomponent, a previous-song subcomponent, and the like, to display a function, content, a style, and the like of the widget. Consequently, if the widget displayed by the electronic device for a long time includes a large quantity of subcomponents, specific device memory is occupied. As a result, background power consumption of the electronic device is caused, and power consumption of the electronic device is increased.

### SUMMARY

Embodiments of this application provide a widget display method and an electronic device. A plurality of components corresponding to a widget are rendered, and a static image is generated and displayed based on the plurality of rendered components. This avoids continuous running and refreshing of the plurality of components in the widget, and reduces memory usage of the widget.

To achieve the foregoing objective, the following technical solutions are used in embodiments of this application.

According to a first aspect, an embodiment of this application provides a widget display method, applied to an electronic device. The method includes: receiving a first trigger operation of a user, where the first trigger operation is used to add a first static widget, and the first static widget corresponds to a plurality of components; rendering the plurality of components corresponding to the first static widget; and generating and displaying a first static image based on the plurality of rendered components, where the first static image is used to display first resource content corresponding to the first static widget.

It can be learned that one static widget may correspond to a plurality of components. In this embodiment of this application, the plurality of components corresponding to one static widget may be rendered. A static image is generated and displayed based on the plurality of rendered components. The static image may be used to display resource content corresponding to the static widget. Replacing the plurality of rendered components with one static image can avoid continuous running and refreshing of a plurality of components in one static widget while ensuring normal display of the static widget, and only one static image needs to be displayed. This reduces memory occupation of the widget and reduces power consumption of the electronic device.

In an implementation of the first aspect, the method further includes: configuring, based on area information and service link information of at least one interaction component in the plurality of components, interaction area information corresponding to the first static image, where the interaction area information indicates an area location corresponding to at least one interaction response area in the first static image and a service link corresponding to the at least one interaction response area.

In addition, in a process of configuring the interaction area information corresponding to the first static image, a target application programming interface may be invoked to configure the interaction area information corresponding to the first static image.

It can be learned that the plurality of components usually include at least one interaction component, and the user may implement, by using the interaction component, an interaction function corresponding to the widget. In this embodiment of this application, in a process of displaying the first static widget, the interaction component is not displayed, but the first static image is displayed. The target application programming interface is a new interface. Therefore, the interaction area information corresponding to the first static image may be configured based on the area information and the service link information of the interaction component and the target application programming interface.

In this way, the user may implement, by using the interaction response area in the first static image, an interaction function corresponding to the static widget. In other words, a specific interaction function can be assigned to the resource content while ensuring that the first static image displays complete resource content,. Further, the static widget can implement some interaction functions, thereby improving user experience.

In a possible implementation of the first aspect, the method further includes: receiving a second trigger operation for the first static image; in response to the second trigger operation, determining a trigger area corresponding to the second trigger operation; and determining the trigger area as the interaction response area, and executing, based on the service link corresponding to the interaction response area, a service associated with the service link.

In addition, in a process of executing, based on the service link corresponding to the interaction response area, the service associated with the service link, a corresponding service interface may be jumped to based on the service link corresponding to the interaction response area.

Alternatively, a display status of the first static image may be switched from a first display state to a second display state based on the service link corresponding to the interaction response area.

It can be learned that in this embodiment of this application, when it is determined, based on the received second trigger operation, that the trigger area corresponding to the second trigger operation is the interaction response area, a corresponding service may be performed based on the service link corresponding to the interaction response area. The executed service may be jumping to a corresponding service interface, or changing a display status of the first static image.

In other words, a specific interaction function can be assigned to the resource content while ensuring that the first static image displays complete resource content,. In addition, a more user-friendly interaction function is further provided, for example, changing a display status of the first static image or jumping to a service interface. Playability can be improved and interaction between the user and the electronic device can be further improved.

In an implementation of the first aspect, before rendering the plurality of components corresponding to the first static widget, the method further includes: creating a widget thread of the first static widget. After generating the first static image, the method further includes: destroying the widget thread of the first static widget. The widget thread may be configured to control a rendering process of the plurality of components corresponding to the first static widget.

In some embodiments of this application, the widget thread of the first static widget may be destroyed after the first static image is generated. Alternatively, the widget thread of the first static widget may be destroyed after the first static image is displayed. It can be learned that one static widget corresponds to one widget thread. It should be understood that, for a widget currently provided by an electronic device like a mobile phone or a tablet computer, when the widget is displayed on an application like a home screen or a leftmost screen, a thread corresponding to the widget is used as a resident thread, occupies specific memory overheads, and also increases system power consumption of the electronic device. The electronic device does not control the thread. However, for the method provided in the implementations of this application, because the static widget is replaced with the static image for display, after a widget thread corresponding to the static widget executes and completes a corresponding task, the widget thread corresponding to the static widget may be destroyed. This avoids occupying a running resource of the electronic device.

In an implementation of the first aspect, in a process of rendering the plurality of components corresponding to the first static widget, a widget rendering tree corresponding to the plurality of components may be generated based on first component information of the plurality of components. The first component information includes layout information and resource information. In addition, the plurality of components are rendered based on the widget rendering tree corresponding to the plurality of components.

In a process of generating the first static image based on the plurality of rendered components, the plurality of rendered components may be saved as the first static image.

It can be learned that, in this embodiment of this application, the widget rendering tree corresponding to the plurality of components may be generated based on the first component information of the plurality of components. In addition, the plurality of components are rendered based on the widget rendering tree corresponding to the plurality of components. The plurality of rendered components are directly saved as the first static image. In this way, the first static image can be directly displayed subsequently, and the plurality of components in the static widget do not need to be continuously run, thereby reducing memory usage of the widget.

In an implementation of the first aspect, in a process of displaying the first static image, the first static image may be added to widget information corresponding to the first static widget. An interface rendering tree corresponding to the first static widget is generated based on the widget information. The interface rendering tree includes a target node, and the target node corresponds to the first static widget. A target interface is rendered and displayed based on the interface rendering tree, where the target interface includes the first static image.

The target interface includes one or more of a home screen of the electronic device, a leftmost screen of the electronic device, or an application interface of an application on the electronic device.

It can be learned that, in this embodiment of this application, in a process of displaying the first static image, the first static image needs to be displayed in a preset area on an entire screen interface. Therefore, the target interface further needs to be rendered. The widget information corresponding to the first static widget includes the first static image, and the interface rendering tree corresponding to the first static widget is generated based on the widget information. The target node in the interface rendering tree corresponds to the first static widget. The target interface is rendered and displayed based on the interface rendering tree, where the target interface includes the first static image. Similarly, in a process of displaying the first static widget in the target interface, the first static widget includes the first static image, and the plurality of components in the static widget do not need to be continuously run, thereby reducing memory usage of the widget.

In an implementation of the first aspect, the method further includes: when detecting that a preset update condition is met, rendering the plurality of components corresponding to the first static widget; and generating and displaying a second static image based on the plurality of rendered components, where the second static image is used to display second resource content corresponding to the first static widget.

It can be learned that, in this embodiment of this application, when an update of the first static widget is periodically triggered or a change event is detected, the plurality of components corresponding to the first static widget may be rendered. In addition, the second static image may be generated and displayed based on the plurality of rendered components, where the second static image is used to display the second resource content corresponding to the second static widget.

In other words, in a process of updating the first static widget, an updated static image is still generated and displayed based on the plurality of rendered components. The updated static image may still be used to replace the plurality of rendered components. After being updated, the static widget still does not need to continuously run and refresh the plurality of components in the static widget. This reduces memory occupation of the widget and reduces power consumption of the electronic device.

In an implementation of the first aspect, the first trigger operation includes a tap operation, a voice operation, or a touch-and-hold operation on a widget icon corresponding to the first static widget.

According to a second aspect, an embodiment of this application provides a display apparatus. The display apparatus includes a home screen application, a widget provider application, a widget manager service, a widget rendering service, a unified rendering service, and a display.

The home screen application is configured to receive a first trigger operation of a user, where the first trigger operation is used to add a first static widget, and the first static widget corresponds to a plurality of components.

The home screen application is further configured to send an addition request to the widget manager service in response to the first trigger operation.

The widget manager service is configured to send an obtaining request to the widget provider application based on the addition request, where the obtaining request is used to request to obtain first component information of the plurality of components.

The widget provider application is configured to send the first component information of the plurality of components to the widget manager service based on the obtaining request.

The widget manager service is further configured to send the first component information of the plurality of components to the widget rendering service.

The widget rendering service is configured to send the first component information of the plurality of components and a first rendering request to the unified rendering service.

The unified rendering service is configured to render the plurality of components based on the first component information of the plurality of components and the first rendering request.

The unified rendering service is further configured to generate a first static image based on the plurality of rendered components, where the first static image is used to display first resource content corresponding to the first static widget.

The unified rendering service is further configured to send the first static image to the home screen application.

The home screen application is further configured to control the display to display the first static image.

The display is configured to display the first static image.

It can be learned that, replacing the plurality of rendered components with one static image can avoid continuous running and refreshing of a plurality of components in one static widget while ensuring normal display of the static widget, and only one static image needs to be displayed. This reduces memory occupation of the widget and reduces power consumption of the electronic device.

In an implementation of the second aspect, the plurality of components include at least one interaction component; and the unified rendering service is further configured to configure, based on area information and service link information of the at least one interaction component, interaction area information corresponding to the first static image, where
the interaction area information indicates an area location corresponding to at least one interaction response area in the first static image and a service link corresponding to the at least one interaction response area.

It can be learned that, in this embodiment of this application, interaction area information corresponding to the first static image may be configured based on the area information and the service link information of the interaction component. In this way, the user may implement, by using the interaction response area in the first static image, an interaction function corresponding to the static widget. In other words, a specific interaction function can be assigned to the resource content while ensuring that the first static image displays complete resource content. Further, the static widget can implement some interaction functions, thereby improving user experience.

According to a third aspect, an embodiment of this application provides an electronic device. The electronic device includes a memory, a processor, and a display. The memory, the display, and the processor are coupled. The display is configured to display a static image. The memory is configured to store computer-readable instructions. When the processor reads the computer-readable instructions from the memory, the electronic device is enabled to perform the widget display method according to the first aspect.

According to a fourth aspect, an embodiment of this application provides a computer-readable storage medium. The computer-readable storage medium includes a computer program, and when the computer program is run on an electronic device, the electronic device is enabled to perform the widget display method according to the first aspect.

### BRIEF DESCRIPTION OF DRAWINGS

FIG. 1 is a schematic flowchart of a related technology according to an embodiment of this application;
FIG. 2 is a diagram of a hardware structure of a mobile phone according to an embodiment of this application;
FIG. 3 is a diagram of a software structure of an electronic device according to an embodiment of this application;
FIG. 4 is a schematic flowchart of a widget display method according to an embodiment of this application;
FIG. 5(A) to FIG. 5(D) are diagrams of interfaces for adding a widget according to an embodiment of this application;
FIG. 6 is a schematic flowchart of adding a widget according to an embodiment of this application;
FIG. 7 is a schematic flowchart of generating a first static image according to an embodiment of this application;
FIG. 8 is a schematic flowchart of destroying a running thread according to an embodiment of this application;
FIG. 9A and FIG. 9B are a schematic flowchart of rendering a target interface according to an embodiment of this application;
FIG. 10 is a diagram of an interface of an interaction response area according to an embodiment of this application;
FIG. 11(A) and FIG. 11(B) are diagrams of interfaces for jumping to a service interface according to an embodiment of this application; and
FIG. 12 is a diagram of a hardware structure of an electronic device according to an embodiment of this application.

### DESCRIPTION OF EMBODIMENTS

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A or B may be singular or plural. In addition, in descriptions of this application, unless otherwise specified, "a plurality of" means two or more than two. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe technical solutions in embodiments of this application, in embodiments of this application, words such as "first" and "second" are used to distinguish same items or similar items that have basically same functions and effects.

A person skilled in the art may understand that the terms such as "first" and "second" do not limit a quantity or an execution sequence, and the terms such as "first" and "second" do not indicate a definite difference. In addition, in some embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may learn that with the evolution of the network architecture and the emergence of new service scenarios, the technical solutions provided in embodiments of this application are also applicable to similar technical problems.

Rapid popularization of electronic devices such as mobile phones, computers, and televisions brings many conveniences and enjoyments to people's life. To improve user experience, applications for implementing different functions are configured in the electronic device. In addition, each application may further provide a plurality of services, and different services may implement different functions. For example, a home screen application is configured in the electronic device, and the home screen application may provide a plurality of service modules, and implement different functions based on the plurality of service modules. To help a user quickly implement a function, the electronic device may generate different components based on different functions, and display the different components on a home screen corresponding to the home screen application. For example, a shortcut of a service commonly used by the user may be generated in a form of a widget.

It may be understood that the widget is a micro application view that can be embedded into the home screen, supports the user in performing function preview and a shortcut operation on the view, and needs a periodic update. In other words, the widget is content that the user expects to be displayed on the home screen for a long time. For example, the widget on the home screen may be determined by a device, or may be specified by the user.

In this way, the user can enter a corresponding application by using the widget, and quickly view some content, or quickly implement a function. The widget may be a visualized widget provided by a third-party application or a system application on the electronic device. For example, a clock widget, a weather widget, and a music widget.

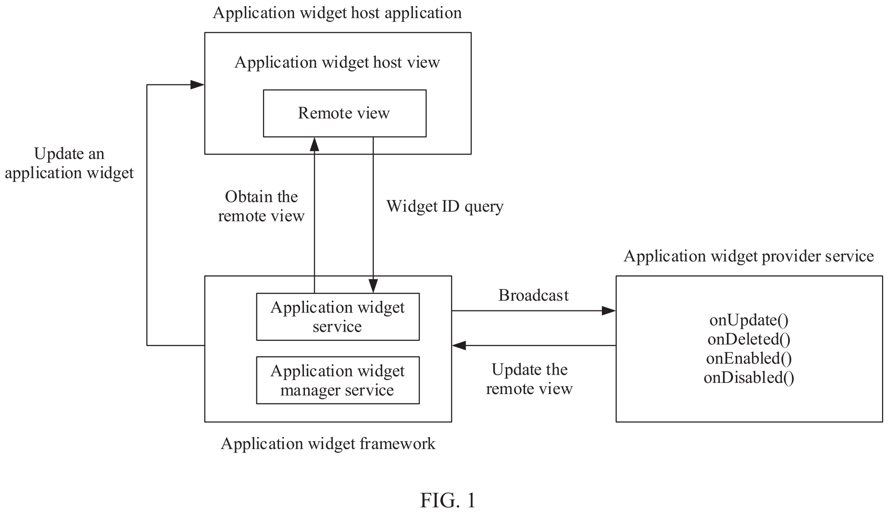

As shown in FIG. 1, a related technology provides a solution for generating a widget. An Android^{®} system is installed on an electronic device in this solution. In this case, the electronic device usually displays, on the home screen, a widget by using a widget framework of an Android^{®} native application widget (App Widget). The widget framework includes an application widget framework (App Widget framework), an application widget service (App Widget Service), and an application widget manager (App Widget Manager) service. The application widget service is a core class of the framework, is one of system services that automatically start after the device is powered on, and is used for widget management, for example, widget loading and deletion, and scheduled events. The application widget manager service is used for actual update and related management of widget views. An application widget host (App Widget Host) application is used to actually control an application widget. The application widget host application may include a home screen application or a leftmost screen application. An application widget host view (App Widget Host View) is used to accommodate a view of an application widget. The view of the application widget may be created based on a description of a remote view (Remote View).

In some examples, the widget may alternatively be used as a widget, a widget, or a card. This is not limited in embodiments of this application. It should be understood that, in embodiments of this application, a widget and a component have different meanings. The widget may be a widget in English, and the component may be a component in English.

The remote view is mainly used to develop an application widget, and the application widget is implemented by using an application widget provider (App Widget Provider) service. The application widget provider service may invoke a function to perform an operation corresponding to the widget. For example, the function may include onEnable(), onDeleted(), onUpdate(), and onDisabled().

Specifically, after receiving a message sent by the application widget service, the application widget host application may create an application widget host view, then query, by using the application widget service, a remote view corresponding to an application widget Id, and finally, transfer the remote view to the application widget host view to update the application widget (update App Widget).

It may be understood that each widget provider application may provide an application widget provider service, and send component data of the widget provider application to the application widget host application by using the application widget provider service. After a system is powered on, the application widget service automatically collects provider information of all widget provider applications. The application widget host application may communicate with the application widget service, may obtain the provider information of all widget provider applications, and obtain, based on the provider information, component data, add a component corresponding to the component data, or update a displayed component. The component data may include a text resource, an image resource, a virtual machine resource, and the like.

Based on the foregoing content, if an entire widget is understood as a root component container, the widget includes one or more subcomponents. For example, the widget may include a cover subcomponent, a song information subcomponent, a play/pause subcomponent, a next-song subcomponent, a previous-song subcomponent, and the like, to display a function, content, a style, and the like of the widget. In this way, the application widget provider service provided by the widget provider application needs to send component data corresponding to the foregoing series of subcomponents to the application widget host application. The application widget host application may obtain the component data corresponding to the series of subcomponents, and add the series of subcomponents corresponding to the component data, to implement a widget generation and display process. However, if the widget displayed by the electronic device for a long time includes a large quantity of subcomponents, specific device memory is occupied. Consequently, a large amount of background power consumption of the electronic device is caused, and power consumption of the electronic device is increased.

Based on the foregoing content, embodiments of this application provide a widget display method and a device. The method includes: receiving a first trigger operation of a user, where the first trigger operation is used to add a first static widget, and the first static widget corresponds to a plurality of components; rendering the plurality of components corresponding to the first static widget; and generating and displaying a first static image based on the plurality of rendered components, where the first static image is used to display first resource content corresponding to the first static widget.

It can be learned that one static widget may correspond to a plurality of components. In this embodiment of this application, the plurality of components may be rendered. A static image is generated based on the plurality of rendered components. In other words, the plurality of rendered components may be replaced with the static image, and the static image may be used to display resource content corresponding to the static widget. Then, the static image may be displayed in the static widget. In this way, continuous running and refreshing of the plurality of components corresponding to the static widget can be avoided while ensuring normal display of the static widget, and only the static image needs to be displayed. This reduces memory usage of the widget, and reduces power consumption of the electronic device.

In some examples, the static widget may include a widget that provides one or more links. A link may be associated with an interface of an application corresponding to the widget. A plurality of links may be correspondingly associated with a plurality of interfaces. The plurality of interfaces may be different interfaces of different applications. This is not limited in this embodiment of this application.

The widget display method provided in embodiments of this application may be applied to the electronic device. In some embodiments, the electronic device may include, for example, a mobile phone, a tablet computer, a smart screen, a personal computer (personal computer, PC), a personal digital assistant (personal digital assistant, PDA), a smartwatch, a netbook, a wearable device, an augmented reality (augmented reality, AR) device, a virtual reality (virtual reality, VR) device, a vehicle-mounted device, and an intelligent vehicle. A specific form of the electronic device is not specially limited in embodiments of this application.

An operating system installed on the electronic device includes but is not limited to iOS^{®}, Android^{®}, Harmony^{®}, Windows^{®}, Linux^{®}, or another operating system. A specific type of the electronic device and a type of an operating system when the operating system is installed are not limited in this application.

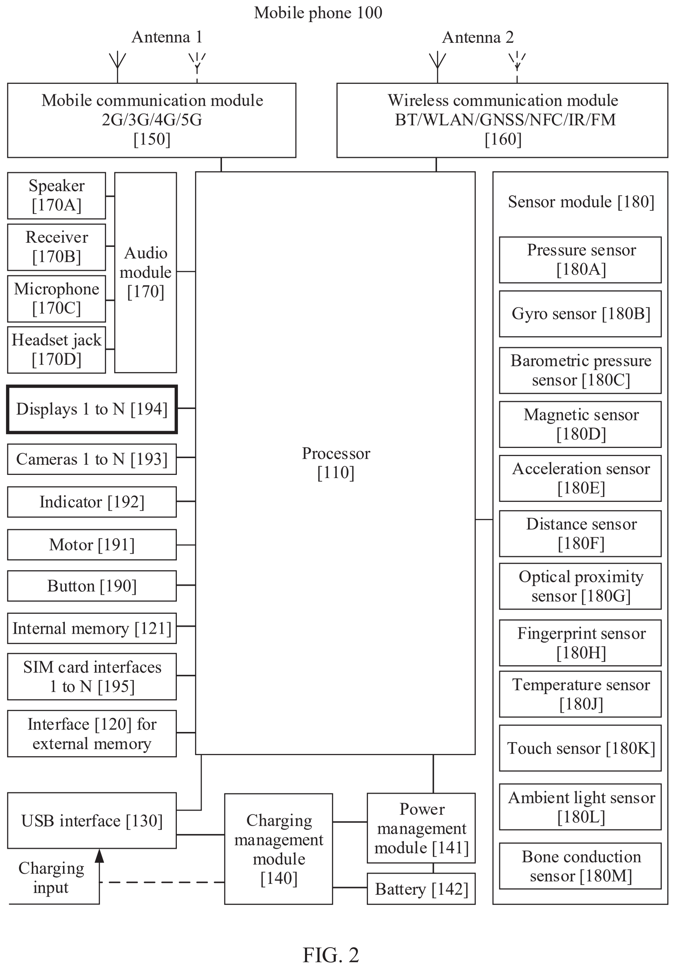

For example, the electronic device is a mobile phone. FIG. 2 is a diagram of a structure of a mobile phone 100.

The mobile phone 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the mobile phone 100. In other embodiments of this application, the mobile phone 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a neural center and a command center of the mobile phone 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the mobile phone 100 may be implemented via the antenna 1, the antenna 2, the mobile communication module 150, the wireless communication module 160, the modem processor, the baseband processor, and the like.

The mobile phone 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The interface 120 for external memory may be used to connect to an external memory card, for example, a micro SD card, to extend a storage capability of the mobile phone 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 executes various functional applications of the mobile phone 100 and data processing by running instructions stored in the internal memory 121. The internal memory 121 may include a program storage area and a data storage area. The program storage area may store an operating system, an application required by at least one function (for example, a sound playing function or an image playing function), and the like. The data storage area may store data (such as audio data and a phone book) and the like created during use of the mobile phone 100. In addition, the internal memory 121 may include a high-speed random access memory, or may include a non-volatile memory, for example, at least one magnetic disk storage device, a flash memory, or a universal flash storage (universal flash storage, UFS).

The mobile phone 100 may implement an audio function by using the audio module 170, the speaker 170A, the receiver 170B, the microphone 170C, the headset jack 170D, the application processor, and the like. For example, playing music, and recording.

The button 190 includes a power button, a volume button, and the like. The button 190 may be a mechanical button, or may be a touch button. The mobile phone 100 may receive a button input, and generate a button signal input related to a user setting and function control of the mobile phone 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

In some embodiments of this application, the display 194 is configured to display an image, a video, a widget, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In addition, the mobile phone 100 may include one or N displays 194, where N is a positive integer greater than 1.

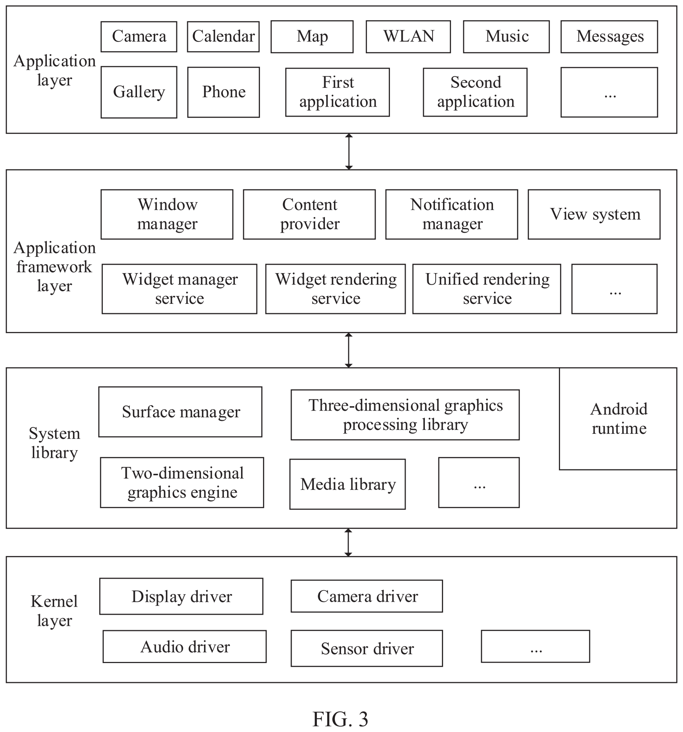

FIG. 3 is a block diagram of a software structure of the mobile phone 100 according to this embodiment of this application.

A software system of the mobile phone 100 may use a layered architecture, an event-driven architecture, a microkernel architecture, a microservice architecture, or a cloud architecture. In this embodiment of the present invention, a software structure of the mobile phone 100 is described by using an Android system with a layered architecture as an example.

FIG. 3 is a block diagram of the software structure of the mobile phone 100 according to this embodiment of the present invention.

In a layered architecture, software is divided into several layers, and each layer has a clear role and task. The layers communicate with each other through a software interface. In some embodiments, an Android system is divided into four layers, which are respectively an application layer, an application framework layer, Android runtime (Android Runtime), a system library, and a kernel layer from top to bottom.

The application layer may include a series of application packages.

As shown in FIG. 3, the application packages may include applications such as Camera, Gallery, Calendar, Phone, Map, WLAN, Music, Messages, a first application, and a second application.

In some embodiments of this application, the first application may include a home screen application, for example, a first home screen application (Host App), a second home screen application (Launcher), or a leftmost screen.

The second application may include a provider application, for example, a widget provider application (Widget Provider App). The widget provider application is used to provide a layout corresponding to a widget and a widget data update capability.

It should be noted that the first application and the second application may be system applications, or may be third-party applications. Application types and application sources of the first application and the second application are not specifically limited in this embodiment of this application.

In some embodiments of this application, after the Android^{®} system is started, the home screen application may be permanently run in the Android^{®} system as a core application. The home screen application may perform basic management on an installed application, for example, deleting or displaying the application.

In some examples, the home screen application may display one or more display interfaces as a home screen of the mobile phone 100. The home screen application may display an application icon, a folder, a weather widget, a clock widget, and the like on the display interface. Certainly, the home screen application may further hide the foregoing widgets. For example, after the weather widget is displayed for a preset time, the home screen application may automatically hide the widget.

In some embodiments of this application, the mobile phone 100 is provided with a leftmost screen. The leftmost screen may be used to provide a user with functions such as search, application suggestion, quick service, and intelligent scene. The leftmost screen may also be used to display notification information that needs to be pushed to the user, for example, an application message subscribed to by the user, a real-time hot search message, weather information, and time information. Certainly, the notification information may alternatively be presented in a form of a widget on the leftmost screen. The widget has an eye-catching appearance, and can remind the user to pay attention to information displayed on the widget. In addition, when the user needs to view the leftmost screen of the mobile phone 100, the user may slide a screen of the mobile phone 100, so that the mobile phone 100 displays the leftmost screen.

In some examples, the widget may alternatively have different sizes. For example, the size of the widget may include 1×1, 2×2, 2×4, or the like.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, a widget manager service, a widget rendering service, a unified rendering service, and the like.

The window manager is used to manage a window program. The window manager may obtain a size of a display, determine whether there is a status bar, lock a screen, take a screenshot, and the like.

The content provider is used to: store and obtain data, and enable the data to be accessed by an application. The data may include a video, an image, an audio, calls that are made and answered, a browsing history, a bookmark, an address book, and the like.

The view system includes visual controls such as a control for displaying a text and a control for displaying an image. The view system may be used to construct an application. A display interface may include one or more views, for example, include a display interface of a message notification icon, and may include a view for displaying a text and a view for displaying an image.

The notification manager enables an application to display notification information in a status bar, and may be used to convey a notification type message. The message may automatically disappear after a short pause without user interaction. For example, the notification manager is used to notify download completion, give a message notification, and the like. The notification manager may alternatively be a notification that appears in a top of a status bar in a system in a form of a graph or a scroll bar text, for example, a notification of an application running in a background or a notification that appears on a screen in a form of a dialog window. For example, text information is prompted in the status bar, an alert tone is made, the electronic device vibrates, or an indicator blinks.

In some embodiments of this application, the widget manager service is used to provide a management capability and a data caching capability of a lifecycle corresponding to a widget. The widget rendering service is used to load component information corresponding to a plurality of components in the widget, and send the component information corresponding to the plurality of components to the unified rendering service, so that the unified rendering service renders the plurality of components.

The unified rendering service is used to render the plurality of components based on the component information corresponding to the plurality of components.

The Android^{®} runtime (Runtime) includes a core library and a virtual machine. The Android^{®} runtime is used to schedule and manage the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is used to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is used to manage a display subsystem and provide fusion of 2D and 3D layers for a plurality of applications.

The media library supports playing and recording in a plurality of commonly used audio and video formats, static image files, and the like. The media library may support a plurality of audio and video coding formats such as MPEG 4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

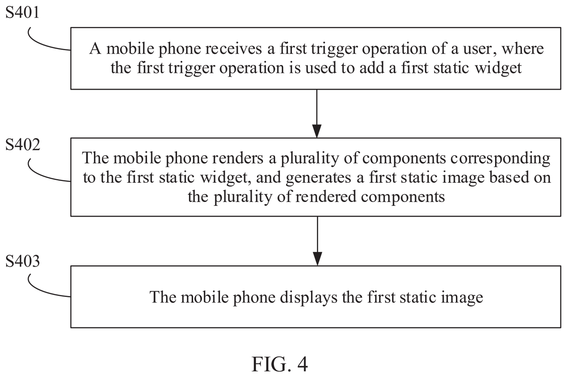

With reference to the accompanying drawings, the following embodiments continue to describe the widget display method provided in embodiments of this application by using an example in which the electronic device is a mobile phone having the structure shown in FIG. 2. Refer to FIG. 4. The method may include the following steps.

S401: The mobile phone receives a first trigger operation of a user, where the first trigger operation is used to add a first static widget, and the first static widget corresponds to a plurality of components.

In some embodiments of this application, a widget may include a static widget or a dynamic widget. In a process in which the mobile phone displays the dynamic widget, display content and/or display effect (for example, a display location, a display size, and a display status) corresponding to the dynamic widget change/changes with time.

For example, one music widget may correspond to a dynamic cover component, a lyric information component, a play/pause component, a next-song component, a previous-song component, and the like. Display content corresponding to the dynamic cover component and the lyrics information component changes with music playing.

However, in a process in which the mobile phone displays the static widget, when the static widget is not updated, neither display content nor display effect corresponding to the static widget changes with time.

For example, after an N^{th} update and before an (N+1)^{th} update of a weather widget, the weather widget may correspond to a weather component (for example, "Sunny 23°C") and an image component (for example, an image corresponding to the sun). Display content and display effect that correspond to the weather component and the image component of the weather widget do not change with time.

For another example, a time widget is updated every minute. After an N^{th} update (for example, 10:10) and before an (N+1)^{th} update (for example, 10:11) of the time widget, the time widget may correspond to a time component (for example, "10: 10") and an image component (for example, an image corresponding to a clock). Display content and display effect that correspond to the time component and the image component of the time widget do not change with time.

In some embodiments of this application, the mobile phone may receive the first trigger operation of the user. The first trigger operation may represent an operation used to add the first static widget.

In a possible implementation, the user may input the first trigger operation to to-be-added first static widget on a widget page of the mobile phone. The first trigger operation may include a tap operation, a voice operation, a touch-and-hold operation, or the like on a widget icon corresponding to the first static widget.

In some examples, the first static widget is used to implement a target function and/or display first resource content, and the first static widget may correspond to the plurality of components. The component may include one or more of a layout component provided by the mobile phone, a basic component, and an extension component provided by an APP on the mobile phone. The basic component includes at least one of a text component, a date component, an image component, and a table component. The extension component includes at least one of an attachment component, an address component, and a signature component. In addition, this embodiment of this application may further include another type of component. Other types of components are not enumerated one by one in this embodiment of this application.

In addition, the APP on the mobile phone may include a system APP, a third-party APP, and the like. A specific function and displayed resource content of the first static widget may be preset, or may be adjusted or set based on a requirement of the user.

In some embodiments of this application, the mobile phone may provide the user with entries of a plurality of widget display functions, and the user may make the mobile phone display the first static widget in a plurality of manners.

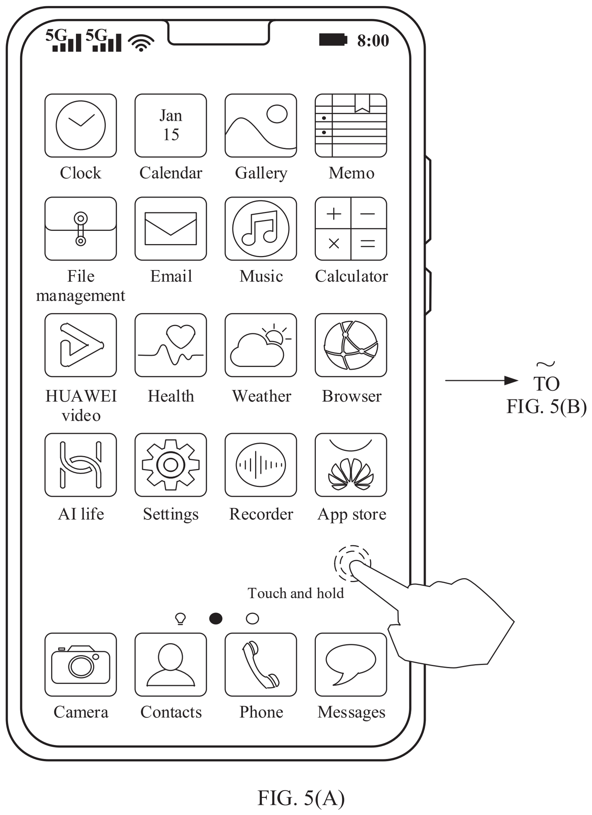

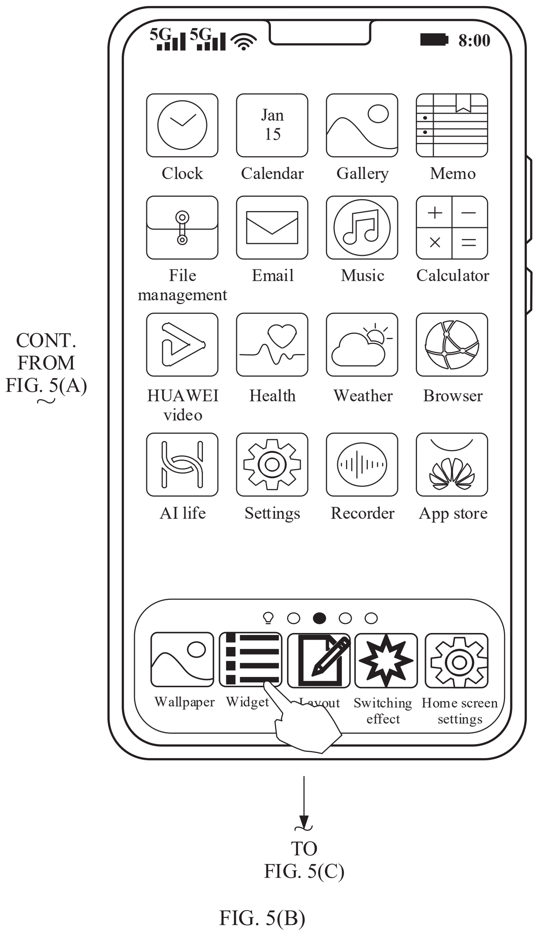

For example, in some possible scenarios, as shown in FIG. 5(A), the user may perform an input operation on a screen of the mobile phone, for example, perform an operation like touch-and-hold, tap, double-tap, or slide on a blank location or a non-functional location on the screen, and the mobile phone may display, for example, a function page in FIG. 5(B) in response to the input operation of the user. The function interface may include a function control corresponding to a wallpaper function, a function control corresponding to a widget function, a function control corresponding to a layout function, a function control corresponding to a switching effect function, and a function control corresponding to a home screen setting function.

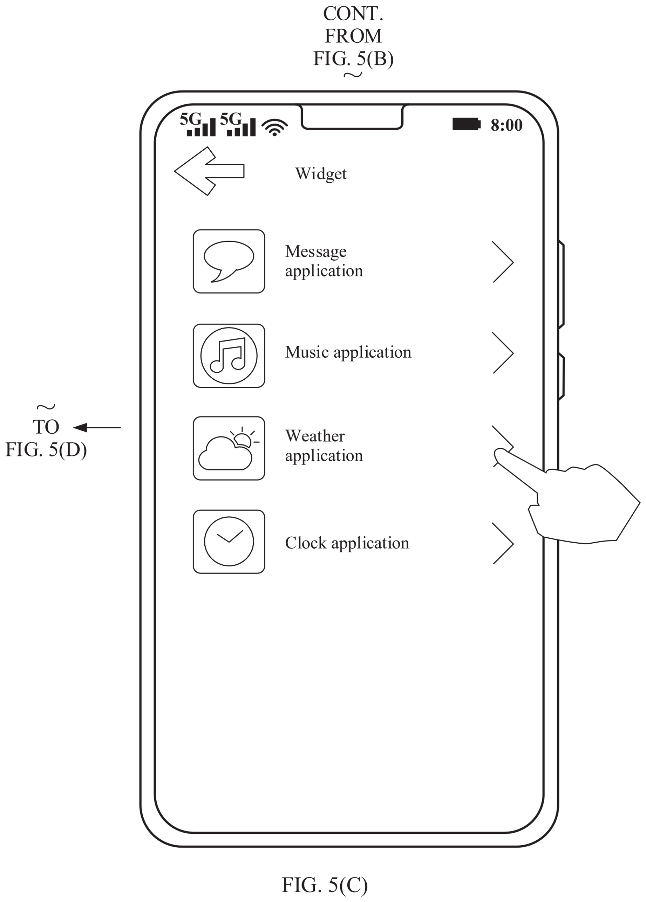

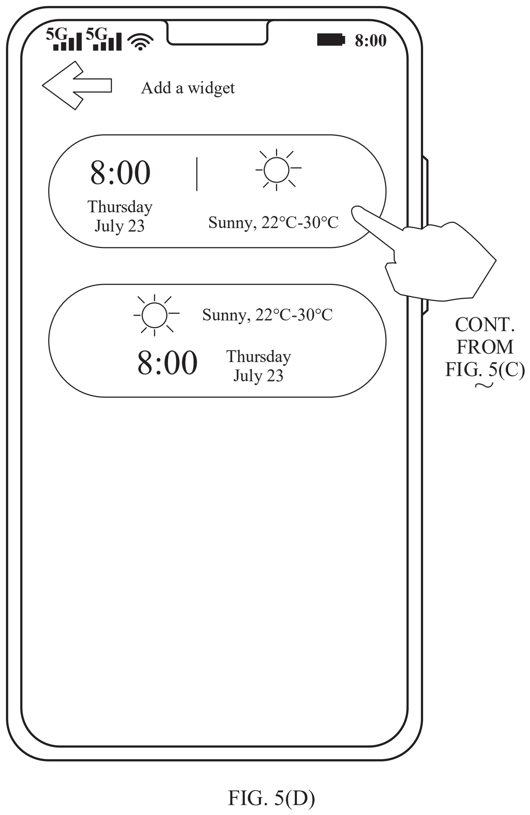

In some examples, the user may perform a tap operation on the function control corresponding to the widget function. In response to the tap operation of the user, the mobile phone displays, for example, a widget detail page in FIG. 5(C). The widget detail page includes application icons corresponding to applications installed on the mobile phone, for example, an application icon corresponding to a message application, an application icon corresponding to a music application, an application icon corresponding to a weather application, an application icon corresponding to a theme application, and an icon corresponding to another widget. The user may perform a tap operation on the application icon corresponding to the weather application, to trigger a process of adding a static widget corresponding to the weather application. In response to the tap operation of the user, the mobile phone displays, for example, a widget addition page in FIG. 5(D). The widget addition page includes at least one static widget corresponding to the weather application.

The user may select any static widget from the at least one static widget as a pre-added first static widget. For example, the user performs the first trigger operation on the first static widget, and the mobile phone receives the first trigger operation of the user, to trigger a subsequent process of adding the first static widget.

For another example, in some possible scenarios, the user may input a first voice control instruction to the mobile phone, for example, "Hey Celia, I want to add a weather widget", or "Hey Celia, I want to add a weather widget". Therefore, in response to the first voice control instruction, the mobile phone displays the widget addition page shown in FIG. 5(D). Then, the user may input a second voice control instruction to the mobile phone, for example, "Hey Celia, I want to add a first weather widget". In response to the second voice control instruction, the mobile phone triggers a subsequent process of adding the first static widget.

In some examples, a voice control instruction that is input by the user may be considered as the first trigger operation.

It should be noted that the first trigger operation may include one or more of a touch-and-hold operation, a tap operation, a drag operation, a move operation, a slide operation, and a voice operation. The mobile phone may provide a plurality of manners of adding the first static widget for the user, so that the user has better use experience. A specific implementation of adding the first static widget is not limited in embodiments of this application.

In some embodiments of this application, the first trigger operation may be further used to add a widget. The mobile phone device receives the first trigger operation of the user, and when determining that the to-be-added widget corresponding to the first trigger operation is a static widget, renders the plurality of components corresponding to the first static widget.

For example, the mobile phone may determine, based on a widget type of the to-be-added widget corresponding to the first trigger operation, whether the widget is a static widget. For another example, the mobile phone may alternatively determine, based on widget content corresponding to the to-be-added widget corresponding to the first trigger operation, whether the widget is a static widget. If display content in the widget is all static content, it may be determined that the to-be-added widget is a static widget. For another example, the mobile phone may alternatively determine, based on a widget component type of the to-be-added widget corresponding to the first trigger operation, whether the widget is a static widget. If widget component types are all text components, it may be determined that the to-be-added widget is a static widget.

S402: The mobile phone renders the plurality of components corresponding to the first static widget, and generates a first static image based on the plurality of rendered components.

In some embodiments of this application, the mobile phone may obtain, in response to the first trigger operation, first component information of the plurality of components corresponding to the first static widget. Then, the mobile phone may render the plurality of components based on the first component information of the plurality of components, and generate the first static image based on the plurality of rendered components, where the first static image is used to display the first resource content corresponding to the plurality of components.

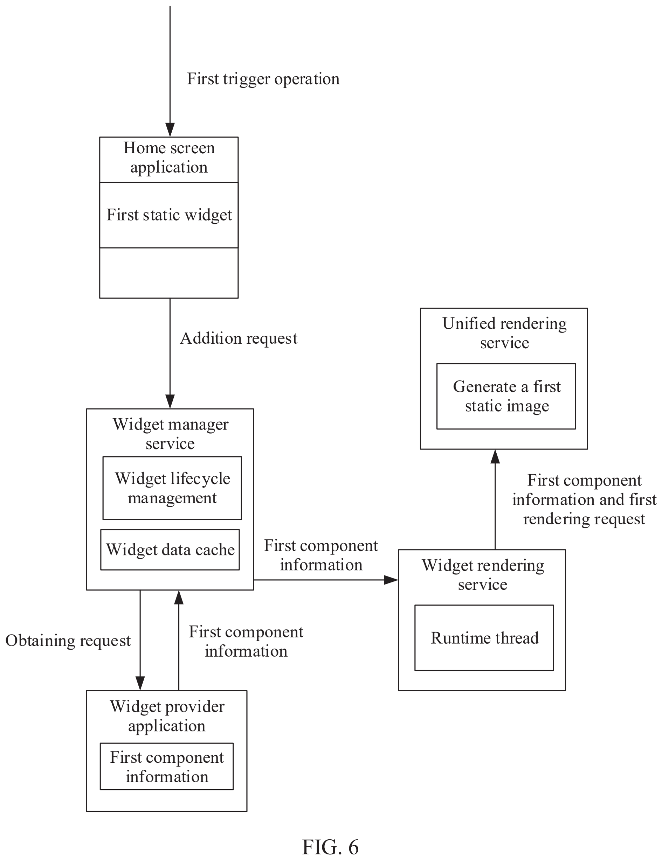

Specifically, as shown in FIG. 6, a home screen application on the mobile phone sends an addition request to a widget manager service in response to the first trigger operation. The addition request is used to add the first static widget. After receiving the addition request, the widget manager service sends an obtaining request to a widget provider application. The obtaining request is used to obtain the first component information of the plurality of components corresponding to the first static widget. The widget provider application receives the obtaining request, and sends, to the widget manager service, the first component information of the plurality of components corresponding to the first static widget.

For example, the first static widget is a weather widget. First component information of a plurality of components corresponding to the weather widget may include layout information and resource information of the components.

In some examples, the layout information includes but is not limited to locations, heights, widths, colors, styles (squares, circles, rhombuses, or the like), refresh intervals, area information, service link information, and the like of the components. The resource information may include but is not limited to location information, weather information, time information, and the like. It may be understood that an implementation form of the resource information may be a text and/or an image, and the resource information may be real-time information or historical information.

It may be understood that the first component information may be preset by the mobile phone or a third-party APP, or may be determined based on selection of the user.

In some examples, the resource information in the component information may be from a local resource of the mobile phone, for example, a photo in a local gallery or a text in a memo, or may be a network resource obtained by the mobile phone from a server, for example, real-time weather information, real-time location information, and real-time time information. In addition, the resource information may be a resource provided by the system APP on the mobile phone, or may be a resource provided by the third-party APP on the mobile phone.

In some implementations, the first component information may further include identification information corresponding to the components. The identification information is used to distinguish the components, and includes but is not limited to a letter and/or a digit.

In some examples, in a process of obtaining the first component information, the widget manager service may further start the widget rendering service, and send the first component information of the plurality of components to the widget rendering service. The widget rendering service may create a widget thread, and the widget thread may be used as a runtime thread. Based on the widget thread, the first component information of the plurality of components and a first rendering request may be sent to a unified rendering service, so that the unified rendering service executes a subsequent rendering task of widget content.

The unified rendering service generates, based on the received first rendering request and first component information of the plurality of components, a widget rendering tree corresponding to the plurality of components. The widget rendering tree includes at least one rendering node, and each rendering node corresponds to each component corresponding to the first component information.

It should be noted that the widget rendering service may be a system service, and the widget manager service may control, by using the system service, namely, the widget rendering service, the unified rendering service to execute the rendering task of the widget content. In other words, a rendering process of the first static widget is implemented by the unified rendering service.

In some embodiments of this application, there is a specific connection relationship between the components. The components may be stacked. For example, a text component is displayed on an image component. The components may also be connected to each other. For example, the text component is connected to the bottom of the image component. In this embodiment of this application, each component may be used as a rendering node, and a data model in a tree structure is generated based on a connection relationship between the components, to implement the rendering process of the entire first static widget.

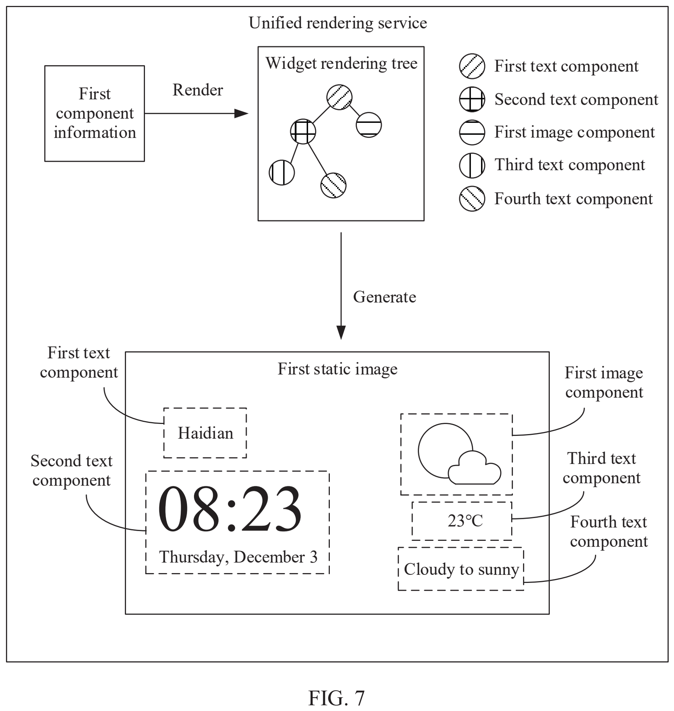

In some examples, as shown in FIG. 7, the unified rendering service renders the plurality of components based on the widget rendering tree corresponding to the plurality of components, and saves the plurality of rendered components as the first static image. The first static image is used to display the first resource content corresponding to the plurality of components.

For example, the first static widget is still a weather widget. A widget rendering tree corresponding to the weather widget may include a first text component, location text content corresponding to the first text component, such as "Haidian", a second text component, time text content corresponding to the second text component, such as "08:23 Thursday, December 3", a third text component, temperature text content corresponding to the third text component, such as "23°C", a fourth text component, weather text content corresponding to the fourth text component, such as "Cloudy to sunny", a first image component, and weather image content corresponding to the first image component, such as an image corresponding to "Cloudy to sunny".

In some examples, the unified rendering service may convert the plurality of rendered components in the widget rendering tree into the first static image. That is, the plurality of rendered components are saved as the first static image. The first resource content corresponding to the components may be displayed in the static image. For example, the first static image may include weather text content, location text content, time text content, temperature text content, and weather image content.

In some other embodiments of this application, after receiving the addition request, the widget manager service sends an obtaining request to the widget provider application. The obtaining request may be further used to obtain layout information in the first component information corresponding to the plurality of components. The widget provider application receives the obtaining request, and sends, to the widget manager service, the layout information in the first component information corresponding to the plurality of components. In a process of obtaining the layout information, the widget manager service may further start the widget rendering service, and send layout information of the plurality of components to the widget rendering service. After receiving the layout information of the plurality of components, the widget rendering service may load, from the widget provider application, resource information in the first component information corresponding to the plurality of components. Then, the widget rendering service may create a runtime thread to send the layout information and the resource information of the plurality of components, and the first rendering request to the unified rendering service, so that the unified rendering service executes a subsequent rendering task of widget content.

It should be noted that a manner of obtaining the first component information corresponding to the plurality of components is not specifically limited in embodiments of this application.

It can be learned that, in this embodiment of this application, the plurality of rendered components are converted into one static image based on the first component information of the plurality of components, that is, one static image is used to replace the plurality of rendered components. In addition, the static image may be used to display the first resource content corresponding to the plurality of components. In this way, continuous running and refreshing of a series of components in the static widget can be avoided on a basis of ensuring that the static widget is normally displayed subsequently, and only the first static image needs to be displayed. This reduces memory usage of the widget, and reduces power consumption of the electronic device.

S403: The mobile phone displays the first static image.

In some embodiments of this application, the mobile phone may display the first static image after generating the first static image.

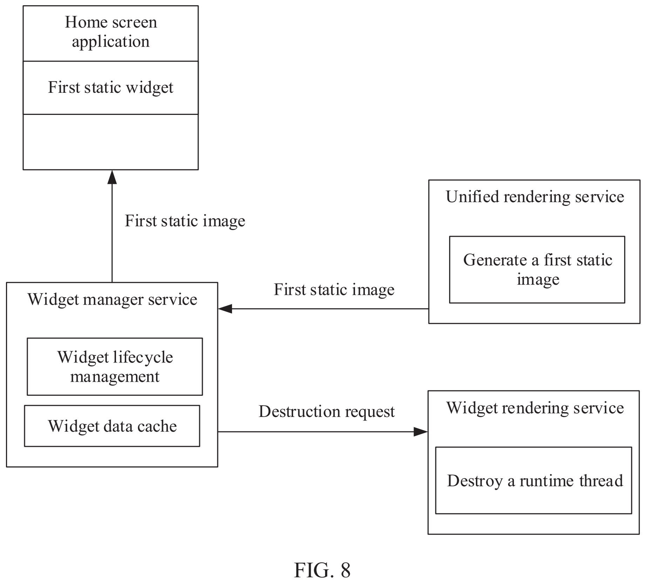

As shown in FIG. 8, after generating the first static image, the unified rendering service in the mobile phone sends the first static image to the widget manager service. After receiving the first static image, the widget manager service sends the first static image to a home screen application. The home screen application may replace the first static widget with the first static image, to display resource content that needs to be displayed by the first static widget.

In other words, in this embodiment of this application, the first static image may be displayed in the first static widget. The first static widget may be equivalent to an image component, and resource content corresponding to the image component is the first static image.

It can be learned that in this embodiment of this application, in a process of displaying the first static widget, only the first static image is displayed. Compared with a related technology, this can ensure that the widget content corresponding to the first static widget is completely displayed to the user, and there is no need to continuously run and refresh a large quantity of components in the first static widget. This reduces use power consumption of the static widget and overall power consumption of the electronic device, and improves user experience.

In some embodiments of this application, in a process in which the mobile phone displays the first static widget, the mobile phone displays the first static widget in a preset area on an entire screen interface. In this way, after rendering the first static widget, the mobile phone further needs to render a target interface. Further, the first static image is displayed on the target interface.

Specifically, the mobile phone may add the first static image to widget information corresponding to the first static widget. In addition, the mobile phone may render the first static widget based on the widget information, to generate an interface rendering tree corresponding to the first static widget. The interface rendering tree includes a target node, and the target node corresponds to the first static widget. The mobile phone may further render the target interface based on the interface rendering tree, and displays the corresponding target interface including the first static widget.

In some examples, the target interface includes one or more of a home screen of the mobile phone, a leftmost screen of the mobile phone, or an application interface of an application in the mobile phone.

It may be understood that the interface rendering tree corresponding to the first static widget may also include at least one rendering node. A rendering node in the interface rendering tree may correspond to the first static widget corresponding to the widget information. Other rendering nodes may correspond to a plurality of to-be-displayed components corresponding to other to-be-displayed content in the target interface.

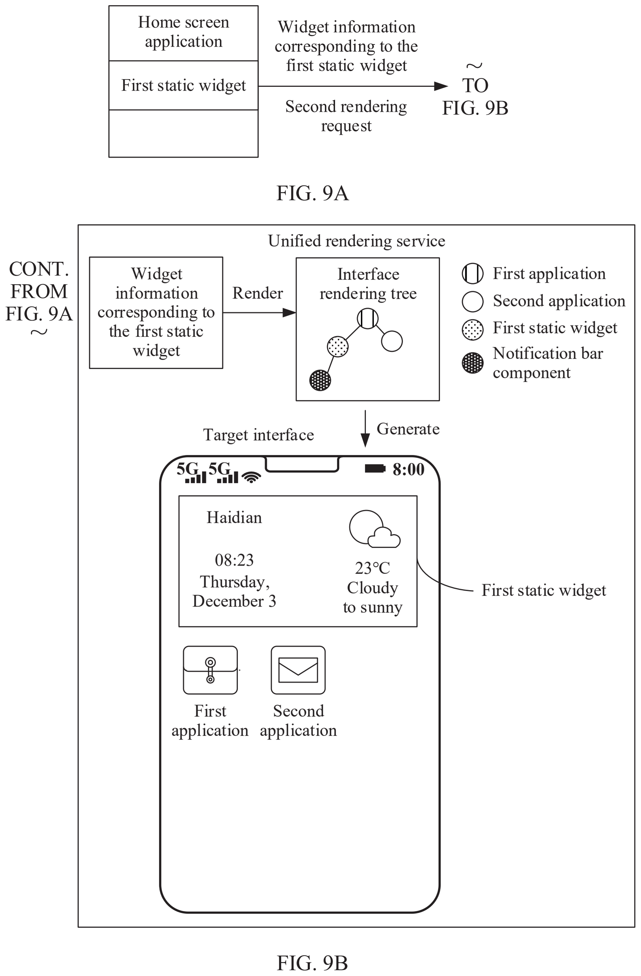

For example, as shown in FIG. 9A and FIG. 9B, after using the first static image as the first resource content that needs to be displayed by the first static widget, the home screen application sends a second rendering request and widget information to the unified rendering service. The second rendering request is used to render the target interface, and the widget information includes layout information corresponding to the first static widget and the first static image. The unified rendering service generates, based on the second rendering request and the widget information, an interface rendering tree corresponding to the target interface. Then, the unified rendering service renders and displays the target interface based on the interface rendering tree, where the target interface includes the first static widget.

In other words, after controlling the unified rendering service to complete rendering of the first static widget, the home screen application further controls the unified rendering service to execute a subsequent rendering task for an entire screen interface.

In some embodiments of this application, the mobile phone may further destroy a runtime thread of the first static widget.

Specifically, in a process of receiving the first static image, the widget manager service may further send a destruction request to the widget rendering service, where the destruction request is used to destroy a runtime thread in the widget rendering service. The widget rendering service destroys the runtime thread based on the destruction request. Certainly, the widget manager service may further destroy the runtime thread after sending the first static image to the home screen application or after the home screen application displays the first static image. An implementation time and an implementation of destroying the runtime thread are not specifically limited in embodiments of this application.

In other words, in a process of generating and displaying a static widget, one static widget corresponds to one runtime thread. The runtime thread may be created by the electronic device in response to a user operation. After a runtime thread corresponding to a static widget executes and completes a corresponding task, the runtime thread corresponding to the static widget may be destroyed, to avoid occupying a running resource of the electronic device.

In some embodiments of this application, some content in the widget is content having an interaction function, so that a target widget can implement some interaction functions. The first static widget may include an interaction component, and there may be one or more interaction components. Layout information in the first component information corresponding to the interaction component may include area information and service link information. The area information is used to represent a location area of the interaction component in the first static widget, and the service link information indicates a service link corresponding to the location area of the interaction component in the first static widget. In other words, after the user inputs a preset operation to a location area corresponding to interactive control in the first static widget, the first static widget may be triggered to execute a corresponding service or jumping to a corresponding service interface is triggered.

In this embodiment of this application, in a process of displaying the first static widget, the interaction component is not displayed, but the first static image is displayed. Therefore, in this embodiment of this application, interaction area information corresponding to the first static image may be configured based on the area information and the service link information of the interaction component.

In some examples, the interaction area information indicates an area location corresponding to at least one interaction response area in the first static image and a service link corresponding to the at least one interaction response area.

In other words, in this embodiment of this application, one or more corresponding response interaction areas may be configured in the first static image based on the area information and the service link information of the interaction component, and each response interaction area corresponds to interaction area information. In this way, the user may input a preset operation to the first static image, to trigger the first static widget to execute a corresponding service or trigger jumping to a corresponding service interface.

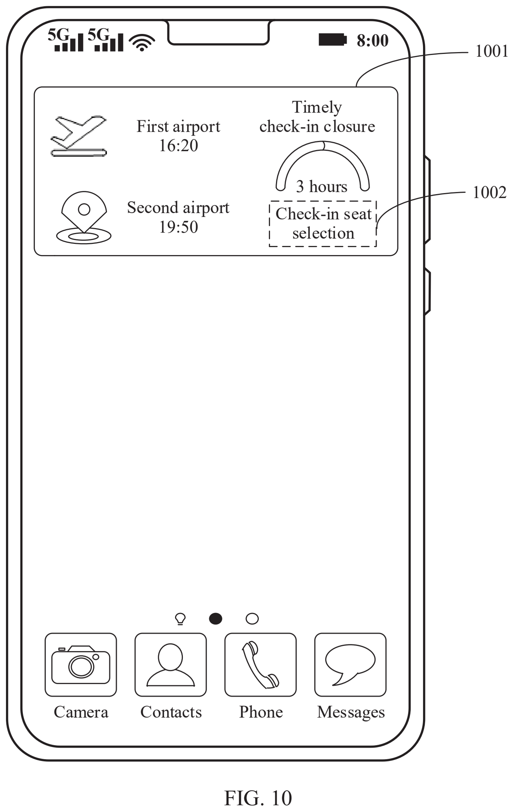

For example, as shown in FIG. 10, an example in which the first static widget is a navigation widget 1001 corresponding to a navigation application is used. The first static widget can provide a user with content having an interaction function. For example, the user may tap an area 1002 corresponding to check-in seat selection in a first static image in the first static widget, to trigger use of a subsequent check-in seat selection function in the navigation application. In other words, the area 1002 corresponding to the check-in seat selection corresponds to an interactive control in a rendering process. In this way, the mobile phone may configure, as an interaction response area based on area information and service link information of the interactive control, the area 1002 corresponding to the check-in seat selection in the first static image, and carry corresponding interaction area information. Further, after detecting that the user performs a tap operation on the area 1002 corresponding to the check-in seat selection, the mobile phone jumps to a service interface corresponding to the check-in seat selection function.

In some embodiments of this application, the user may input a second trigger operation to the first static image, to implement a service function corresponding to the first static widget.

Specifically, the mobile phone may receive the second trigger operation for the first static image, and determine, in response to the second trigger operation, a trigger area corresponding to the second trigger operation. Then, the mobile phone may determine that the trigger area is an interaction response area, and execute a corresponding service based on a service link corresponding to the interaction response area.

In an implementation, in a process of executing a corresponding service based on the service link corresponding to the interaction response area, the mobile phone may jump to a corresponding service interface based on the service link corresponding to the interaction response area.

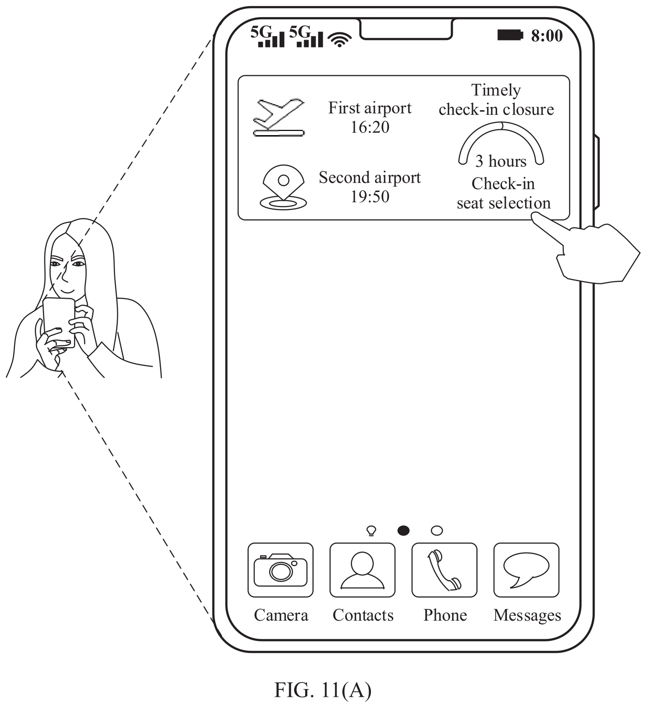

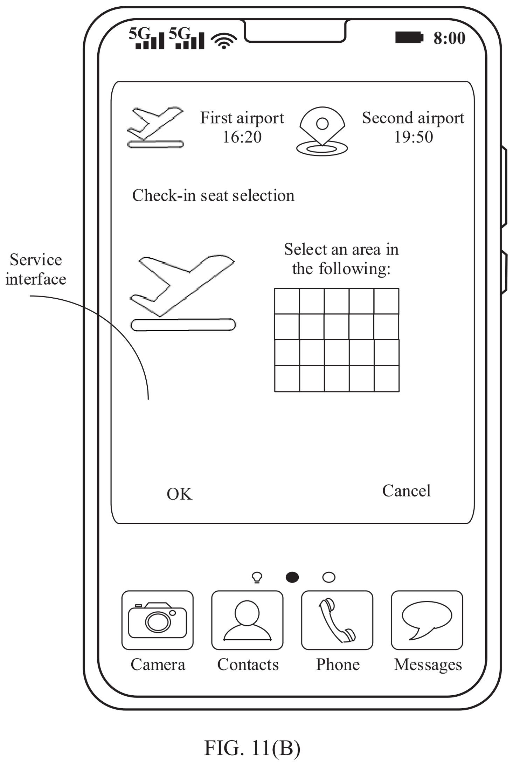

For example, as shown in FIG. 11(A), the mobile phone receives a tap operation performed by the user on an area corresponding to check-in seat selection in a first static image, and determines whether the area corresponding to the check-in seat selection is an interaction response area. When it is determined that the area corresponding to the check-in seat selection is the interaction response area, a service interface is jumped to based on a service link of the area corresponding to the check-in seat selection, as shown in FIG. 11(B).

In another implementation, the mobile phone may further change a display status of the first static widget. For example, the first static widget may be switched to rotation dynamic display, that is, the first static image rotates in a clockwise or counterclockwise direction. For another example, the first static widget may be further switched to highlighted dynamic display, that is, the first static image undergoes a cyclical transformation from expansion to contraction and vice versa. For another example, the first static widget may be further switched to tilt dynamic display, that is, the first static image tilts in a horizontal direction and/or a vertical direction within a preset angle.

Specifically, in a process of performing a corresponding service based on the service link corresponding to the interaction response area, the mobile phone may switch the display status of the first static image from a first display state to a second display state based on the service link corresponding to the interaction response area. The first display state is a current static state, and the second display state may include a tilt display state, a rotation display state, a highlight display state, or the like.

For example, the mobile phone receives a tap operation performed by the user on a blank area in the first static image, and determines whether the blank area is an interaction response area. When it is determined that the blank area is the interaction response area, a current display status of the first static image is switched to a tilt display state, a rotation display state, or a highlight display state based on a service link of the blank rotation.

It should be noted that a specific service executed by the mobile phone based on the service link corresponding to the interaction response rotation is not limited in embodiments of this application. In addition, the second display state may be any display state that can be implemented by the first static image.

In some embodiments of this application, a tap event that is input by the user may be triggered by the first static image based on the configured interaction area information. To be specific, internal code of the first static widget does not support onClick customization, that is, does not support an event to occur when an object is tapped. A redirection link needs to be configured based on the interaction area information.

In the method provided in embodiments of this application, the target application programming interface may be invoked to configure the interaction area information corresponding to the first static image. It should be understood that the target application programming interface may be an interface provided by a framework layer or an application framework layer, and may provide a service link, so that a static image has an interaction function. Based on this, for the first static image displayed on the home screen application, the leftmost screen application, or the like, the user may perform interaction in a manner like tapping or double-tapping, and implement a corresponding function by using a service link. For example, the target application programming interface may include a link interface.

In an implementation, corresponding partial code content in the first static widget is as follows:

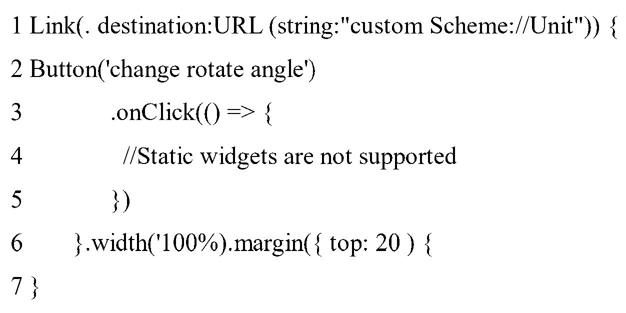

It should be noted that, in this embodiment of this application, the interaction area information may further include an interaction area identifier and an event identifier corresponding to the service link information. The event identifier may uniquely identify any type of information of each event, and the event type may be a tap event, a touch-and-hold event, or the like. For example, a tap operation on a first area in the first static image and a tap operation on a second area in the first static image may correspond to different events, and a personal home page of the user may be jumped to due to the tap operation on the first area. A tap operation on the second area may implement a function of following a user.

It can be learned that, in this embodiment of this application, the interaction area information may be configured for the first static image in the first static widget, so that a specific interaction function can be assigned to resource content while ensuring that the first static widget displays complete resource content. In this way, the static image can implement some interaction functions, thereby improving user experience. In addition, a more user-friendly interaction function is further provided, for example, changing a display status of the first static image. Playability can be improved and interaction between the user and the electronic device can be further improved.

In some embodiments of this application, the mobile phone updates the first static widget in response to the first static image meeting an update condition.

Specifically, the mobile phone renders a plurality of components in response to the first static image meeting the update condition. The mobile phone may generate a second static image based on the plurality of rendered components, where the second static image is used to display second resource content corresponding to the plurality of components. The mobile phone may further display the second static image. The second static image is an image obtained after the first static image is updated.

In some examples, the update condition may include a change event of resource content in a provider application after preset duration, or the like. This is not limited in this embodiment of this application.

In other words, when the mobile phone periodically triggers update of the first static widget or detects a change event, the home screen application continues to send a latest addition request to the widget manager service. The widget manager service continues to send a latest obtaining request to the widget provider application based on the latest addition request, where the latest obtaining request is used to request to obtain a second component information of the plurality of components. The widget provider application sends the second component information of the plurality of components to the widget manager service based on the latest obtaining request. The widget manager service sends the second component information of the plurality of components to the widget rendering service. The widget rendering service re-creates a runtime thread to facilitate subsequent rendering of a latest static widget. The widget rendering service sends the second component information of the plurality of components and a latest first rendering request to the unified rendering service. The unified rendering service renders a plurality of latest components based on the second component information of the plurality of components and the latest first rendering request, and generates a second static image based on the plurality of rendered latest components, where the second static image is used to display second resource content corresponding to the first static widget. The unified rendering service sends the second static image to a home screen application, so that the home screen application controls a display to display the second static image. The display may display the second static image.

It can be learned that, in this embodiment of this application, in a process of updating the first static widget, an updated static image is still generated and displayed based on the plurality of rendered components. That is, the plurality of rendered components may be replaced with the updated static image, and the updated static image may be used to display and update the resource content corresponding to the first static widget. The widget does not need to continuously run and refresh a series of components in the static widget. This reduces memory usage of the widget, and reduces power consumption of the electronic device.

In some solutions, a plurality of embodiments of this application may be combined, and a combined solution is implemented. Optionally, some operations in the procedures of the method embodiments are optionally combined, and/or a sequence of some operations is optionally changed. In addition, an execution sequence between steps of each process is merely an example, and does not constitute a limitation on an execution sequence between the steps. The steps may alternatively be performed in another execution sequence. This is not intended to indicate that the execution sequence is the only sequence in which these operations can be performed.

A person of ordinary skill in the art may figure out a plurality of manners to re-rank the operations described in embodiments of this application. In addition, it should be noted that process details in an embodiment of this application are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

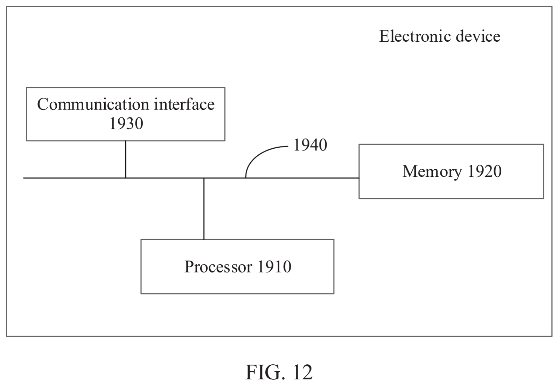

An embodiment of this application further provides an electronic device. For example, the electronic device may be the foregoing mobile phone. As shown in FIG. 12, the electronic device may include one or more processors 1910, a memory 1920, and a communication interface 1930.

The memory 1920 and the communication interface 1930 are coupled to the processor 1910. For example, the memory 1920, the communication interface 1930, and the processor 1910 may be coupled together through a bus 1940.

The communication interface 1930 is configured to perform data transmission with another device. The memory 1920 stores computer program code. The computer program code includes computer instructions. When the computer instructions are executed by the processor 1910, the electronic device is enabled to perform the posture detection method in embodiments of this application.

The processor 1910 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The processor may implement or execute various example logical blocks, modules, and circuits described with reference to content of this disclosure. Alternatively, the processor may be a combination of processors implementing a computing function, for example, a combination of one or more microprocessors, or a combination of a DSP and a microprocessor.

The bus 1940 may be a peripheral component interconnect (Peripheral Component Interconnect, PCI) bus, an extended industry standard architecture (Extended Industry Standard Architecture, EISA) bus, or the like. The bus 1940 may be classified into an address bus, a data bus, a control bus, and the like. For ease of representation, only one bold line is used for representation in FIG. 12, but this does not mean that there is only one bus or only one type of bus.

An embodiment of this application further provides a display apparatus. The display apparatus includes a home screen application, a widget provider application, a widget manager service, a widget rendering service, a unified rendering service, and a display.

The home screen application, configured to receive a first trigger operation of a user, where the first trigger operation is used to add a first static widget, and the first static widget corresponds to a plurality of components; and the home screen application is further configured to send an addition request to the widget manager service in response to the first trigger operation. The widget manager service is configured to send an obtaining request to the widget provider application based on the addition request, where the obtaining request is used to request to obtain first component information of the plurality of components. The widget provider application is configured to send the first component information of the plurality of components to the widget manager service based on the obtaining request. The widget manager service is further configured to send the first component information of the plurality of components to the widget rendering service. The widget rendering service is configured to send the first component information of the plurality of components and a first rendering request to the unified rendering service. The unified rendering service is configured to render the plurality of components based on the first component information of the plurality of components and the first rendering request. The unified rendering service is further configured to generate a first static image based on the plurality of rendered components. The first static image is used to display first resource content corresponding to the first static widget. The unified rendering service is further configured to send the first static image to the home screen application, and the home screen application is further configured to display the first static image.

In some examples, the unified rendering service is further configured to configure, based on area information and service link information of at least one of the plurality of components, interaction area information corresponding to the first static image. The interaction area information indicates an area location corresponding to at least one interaction response area in the first static image and a service link corresponding to the at least one interaction response area.

An embodiment of this application further provides an electronic device. The electronic device includes a memory, a camera, and a display. The camera includes a processor. The memory and the display are coupled to the processor. The display is configured to display a first static image. The memory is configured to store computer-readable instructions. When the processor reads the computer-readable instructions from the memory, the electronic device performs related method steps in the foregoing method embodiments.

An embodiment of this application further provides a computer-readable storage medium. The computer-readable storage medium stores computer program code. When the processor executes the computer program code, an electronic device performs related method steps in the foregoing method embodiments.

An embodiment of this application further provides a computer program product. When the computer program product is run on a computer, the computer is enabled to perform related method steps in the foregoing method embodiments.

An embodiment of this application further provides a chip system, including a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, the chip system may also include one or more memories. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

The electronic device, the computer storage medium, or the computer program product provided in this application is configured to perform the corresponding method provided above. Therefore, for beneficial effect that can be achieved by the electronic device, the computer storage medium, or the computer program product, refer to the beneficial effect in the corresponding method provided above. Details are not described herein again.

The foregoing descriptions about implementations allow a person skilled in the art to clearly understand that, for the purpose of convenient and brief description, division of the foregoing functional modules is used as an example for illustration. In actual application, the foregoing functions can be allocated to different functional modules and implemented based on a requirement, that is, an inner structure of an apparatus is divided into different functional modules to implement all or some of the functions described above.

In several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the part essentially contributing to the technical solutions in embodiments of this application or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A widget display method, applied to an electronic device, wherein the method comprises:
receiving a first trigger operation of a user, wherein the first trigger operation is used to add a first static widget, and the first static widget corresponds to a plurality of components;
rendering the plurality of components corresponding to the first static widget;
generating a first static image based on the plurality of rendered components, wherein the first static image is used to display first resource content corresponding to the first static widget; and
displaying the first static image.

2. The method according to claim 1, wherein the method further comprises:
configuring, based on area information and service link information of at least one interaction component in the plurality of components, interaction area information corresponding to the first static image, wherein
the interaction area information indicates an area location corresponding to at least one interaction response area in the first static image and a service link corresponding to the at least one interaction response area.

3. The method according to claim 2, wherein configuring the interaction area information corresponding to the first static image comprises:
invoking a target application programming interface to configure the interaction area information corresponding to the first static image.

4. The method according to claim 2 or 3, wherein the method further comprises:
receiving a second trigger operation for the first static image;
in response to the second trigger operation, determining a trigger area corresponding to the second trigger operation; and
determining the trigger area as the interaction response area, and executing, based on the service link corresponding to the interaction response area, a service associated with the service link.

5. The method according to claim 4, wherein executing, based on the service link corresponding to the interaction response area, the service associated with the service link comprises:
jumping to a corresponding service interface based on the service link corresponding to the interaction response area; or
switching a display status of the first static image from a first display state to a second display state based on the service link corresponding to the interaction response area.

6. The method according to any one of claims 1 to 5, wherein
before rendering the plurality of components corresponding to the first static widget, the method further comprises:
creating a widget thread of the first static widget; and
after generating the first static image, the method further comprises:
destroying the widget thread of the first static widget.

7. The method according to any one of claims 1 to 6, wherein rendering the plurality of components corresponding to the first static widget comprises:
generating, based on first component information of the plurality of components, a widget rendering tree corresponding to the plurality of components, wherein the first component information comprises layout information and resource information; and
rendering the plurality of components based on the widget rendering tree corresponding to the plurality of components; and
generating the first static image based on the plurality of rendered components comprises:
saving the plurality of rendered components as the first static image.

8. The method according to any one of claims 1 to 7, wherein displaying the first static image comprises:
adding the first static image to widget information corresponding to the first static widget;
generating, based on the widget information, an interface rendering tree corresponding to the first static widget, wherein the interface rendering tree comprises a target node, and the target node corresponds to the first static widget;
rendering a target interface based on the interface rendering tree; and
displaying the target interface, wherein the target interface comprises the first static image, wherein
the target interface comprises a home screen of the electronic device, a leftmost screen of the electronic device, or an application interface of an application on the electronic device.

9. The method according to any one of claims 1 to 8, wherein the method further comprises:
in response to the first static image meeting an update condition, rendering the plurality of components corresponding to the first static widget;
generating a second static image based on the plurality of rendered components, wherein the second static image is used to display second resource content corresponding to the first static widget; and
displaying the second static image.

10. The method according to any one of claims 1 to 9, wherein the first trigger operation comprises a tap operation, a voice operation, or a touch-and-hold operation for a widget icon corresponding to the first static widget.

11. A display apparatus, wherein the display apparatus comprises a home screen application, a widget provider application, a widget manager service, a widget rendering service, and a unified rendering service;
the home screen application is configured to receive a first trigger operation of a user, wherein the first trigger operation is used to add a first static widget, and the first static widget corresponds to a plurality of components;
the home screen application is further configured to send an addition request to the widget manager service in response to the first trigger operation;
the widget manager service is configured to send an obtaining request to the widget provider application based on the addition request, wherein the obtaining request is used to request to obtain first component information of the plurality of components;
the widget provider application is configured to send the first component information of the plurality of components to the widget manager service based on the obtaining request;
the widget manager service is further configured to send the first component information of the plurality of components to the widget rendering service;
the widget rendering service is configured to send the first component information of the plurality of components and a first rendering request to the unified rendering service;
the unified rendering service is configured to render the plurality of components based on the first component information of the plurality of components and the first rendering request;
the unified rendering service is further configured to generate a first static image based on the plurality of rendered components, wherein the first static image is used to display first resource content corresponding to the first static widget;
the unified rendering service is further configured to send the first static image to the home screen application; and
the home screen application is further configured to display the first static image.

12. The display apparatus according to claim 11, wherein
the unified rendering service is further configured to configure, based on area information and service link information of at least one interaction component in the plurality of components, interaction area information corresponding to the first static image, wherein
the interaction area information indicates an area location corresponding to at least one interaction response area in the first static image and a service link corresponding to the at least one interaction response area.

13. An electronic device, wherein the electronic device comprises a memory, a processor, and a display, the memory and the display are coupled to the processor, the display is configured to display a static image, the memory is configured to store computer-readable instructions, and when the processor reads the computer-readable instructions from the memory, the electronic device is enabled to perform the widget display method according to any one of claims 1 to 10.

14. A computer-readable storage medium, wherein the computer-readable storage medium comprises a computer program, and when the computer program is run on an electronic device, the electronic device is enabled to perform the widget display method according to any one of claims 1 to 10.
